# EUROPÄISCHE PATENTSCHRIFT

(11) **EP 1 391 615 B1**
(45) Veröffentlichungstag und Bekanntmachung des Hinweises auf die Patenterteilung: **22.11.2006**
(21) Anmeldenummer: 03018294.3
(22) Anmeldetag: 12.08.2003
(51) Int. Cl.: F15B 15/28, F16D 25/12

(54) **Kolben-Zylindereinheit**
Piston-cylinder unit
Unité de piston-cylindre

(30) Priorität: 22.08.2002 DE 10238402
(43) Veröffentlichungstag der Anmeldung: 25.02.2004
(73) Patentinhaber: ZF Sachs AG, 97424 Schweinfurt (DE)
(72) Erfinder: Buhl, Jörg, Dipl.-Ing. (FH), 97453 Schonungen (DE); Gebauer, Dieter, Dipl.-Ing. (FH), 97505 Geldersheim (DE); Tulaczko, Boleslaw, Dipl.-Ing., 97453 Schonungen (DE); Ludsteck, Sven, 97702 Reichenbach (DE)

(56) Entgegenhaltungen:
- EP-A- 0 631 057
- DE-A1- 3 910 691
- DE-A1- 10 049 913
- US-A- 6 085 884

## Beschreibung

Die Erfindung betrifft eine Kolben-Zylindereinheit gemäß dem Oberbegriff des Patentanspruchs 1.

Eine solche Kolben-Zylindereinheit ist beispielsweise aus der DE 199 15 832 A1 bekannt und dient etwa der Betätigung einer hydraulischen Kupplung oder Bremse. Die Kolben-Zylindereinheit, die in diesem Beispiel einen Geberzylinder darstellt, wird über das Brems- oder Kupplungspedal, welches mit der Kolbenstange des Zylinders in Verbindung steht, aktiviert. Der im Geberzylinder erzeugte hydraulische Druck wird über ein mit Hydraulikflüssigkeit befülltes Leitungssystem an einen Nehmerzylinder übertragen, welcher dort eine Verschiebung eines Arbeitskolbens bewirkt und damit beispielsweise einen Kupplungsausrücker betätigen kann. Des Weiteren weist die genannte Kolben-Zylindereinheit ein Sensorsystem auf, welches der Erkennung der Stellung des Kolbens innerhalb des Zylinders dient. Dazu ist am Außenumfang des Kolbens eine zur Zylinderinnenwand offene Ringnut ausgebildet, an der ein ringförmiger Permanentmagnet angeordnet ist, welcher mit dem Kolben entlang der Innenwandung des Zylinders axial verschiebbar ist. An der Außenwandung des Zylindergehäuses ist ein Aufnahmeteil befestigt, in dem zwei Hall-Schalter angeordnet sind, deren Axialabstand einer Anfangs- und einer Endposition des Kolbens entspricht und die auf das Magnetfeld des am Kolben befindlichen Permanentmagneten ansprechen, und einen Schaltvorgang bzw. ein elektrisches Signal beim Vorbeigleiten des Permanentmagneten auslösen. Zur Weitergabe des Signals an nicht dargestellte Steuer- oder Kontrollstrukturen besitzt das Aufnahmeteil ein elektrisches Anschlusskontaktteil.

Die Schrift offenbart keine detaillierten Angaben, wie der Permanentmagnet am Kolben befestigt ist. Angesichts der einzigen Figur kann jedoch davon ausgegangen werden, dass in einem ersten Arbeitsschritt der Kolben gefertigt wird und in einem weiteren Arbeitsschritt der Ringmagnet von der dem Druckraum abgewandten Seite des Kolbens in die Ringnut des Kolbens aufgeschoben wird. Dabei ist von Nachteil, dass bei diesem Zusammenbau von Kolben und Permanentmagnet auch bei größter Sorgfalt die Gefahr einer Zerstörung des Permanentmagneten infolge von plötzlichen, schockartigen Belastungen des Kolbens nicht ausgeschlossen werden kann und somit die Positionserkennung des Kolbens fehlerhaft erfolgen kann. Außerdem werden durch die nachträgliche Montage des Permanentmagneten erhebliche Fertigungskosten verursacht.

Die DE 39 10 691 A1 offenbart eine gattungsgemäße Kolben-Zylindereinheit, insbesondere einen Kupplungsgeberzylinder, dessen Kolben einen Permanentmagnet zur Sensierung der Kolbenstellung innerhalb des Zylindergehäuses aufweist. Der Magnet ist dabei in den Boden eines aus Kunststoffkolbens eingespritzt und steht lediglich mit einer Stimsseite im unmittelbaren Kontakt zum fluidbefüllten Druckraum. Auch hierbei besteht das oben erwähnte Problem, dass der spröde Magnet bei einer Schockbelastung zerbersten kann.

Weitere Kolben-Zylindereinheiten mit mindestens einem am Kolben angeordneten Permanentmagneten sind in der DE 41 16 651 A1, der DE 43 41 810 A1 und der DE 690 00 218 T2 beschrieben, aus deren Figuren ebenfalls eine Anordnung mit den Nachteilen gemäß der eingangs erläuterten DE 199 15 832 A1 zu entnehmen ist.

Von dem genannten Stand der Technik ausgehend, liegt der Erfindung die Aufgabe zugrunde, eine Kolben-Zylindereinheit mit einem Sensorsystem vorzuschlagen, bei der der Permanentmagnet betriebssicher am Kolben angeordnet ist und insbesondere einer Schockbelastung zerstörungsfrei standhalten kann.

Die vorstehend genannte Aufgabe wird durch das im Kennzeichen des Patentanspruchs 1 angegebene Merkmal gelöst. Zum besseren Schutz des Permanentmagneten vor einer Stoßeinwirkung im Kolben ist erfindungsgemäß vorgesehen, den Permanentmagneten radial innerhalb des Kolbens und von diesem axial eingefasst anzuordnen sowie den Permanentmagneten am Kolben elastisch zu lagern.

Vorteilhafte Weiterbildungen und Ausgestaltungen der Erfindung sind in den Unteransprüchen angegeben.

Gemäß Anspruch 2 umfasst der Kolben einen Stützkörper und eine diesen zumindest teilweise ummantelnde Kolbenschafthülse mit einem Boden, wobei der Permanentmagnet zwischen dem Stützkörper und dem Boden angeordnet ist und an der dem Boden abgewandten Stirnseite elastisch gelagert ist und von dem Boden lagegesichert wird. Diese Anordnung lässt eine leichte Montage zu, indem zuerst der Magnet in die Kolbenschafthülse eingeführt wird und dann der Stützkörper eingeschoben wird, so dass der Permanentmagnet axial zwischen dem Boden der Kolbenschafthülse und dem Stützkörper festgelegt ist.

Ebenso kann dem Vorschlag von Anspruch 3 folgend, der Permanentmagnet in einer Aussparung am Stützkörper angeordnet werden.

In einer vorteilhaften Weiterbildung der Erfindung gemäß Anspruch 4 ist vorgesehen, die Kolbenschafthülse aus einem nicht oder nur schwach magnetisierbaren Material auszuführen. Dazu kann beispielsweise ein metallisches Material, z.B. Edelstahl, eingesetzt werden, mit der sich im Zusammenwirken mit einer an der Gehäuseinnenwandung des Zylinders angeordneten elastomeren Ringdichtung eine günstige Gleitpaarung ergibt. Durch die Verwendung eines solchen Materials wird das von dem Permanentmagneten ausgehende magnetische Feld so wenig wie möglich beeinflusst. Damit werden insbesondere die steilen Gradienten des Magnetfeldes erhalten, was vorteilhaft für eine sichere Sensierung des Magnetfeldes bei sehr schnellen Kolbenbewegungen ist.

Die Erfindung wird nachfolgend anhand eines Ausführungsbeispieles mit Bezug auf die anliegende Zeichnung näher erläutert. In den Figuren sind übereinstimmende Bauteile mit gleichen Bezugsziffern versehen. Es zeigen:
- Fig. 1: Eine Schnittdarstellung einer Kolben-Zylindereinheit mit einem Sensorsystem;
- Fig. 2a: einen Kolben mit einem Stützkörper und daran ausgebildeten Federzungen sowie einer Kolbenschafthülse, zwischen denen ein Permanentmagnet elastisch gelagert ist;
- Fig. 2b: einen Kolben, wobei der Permanentmagnet auf einer elastischen Unterlage gelagert ist;
- Fig. 2c: einen Stützkörper eines Kolbens, an dem radiale und axiale Federzungen zur Lagerung des Permanentmagneten ausgebildet sind.

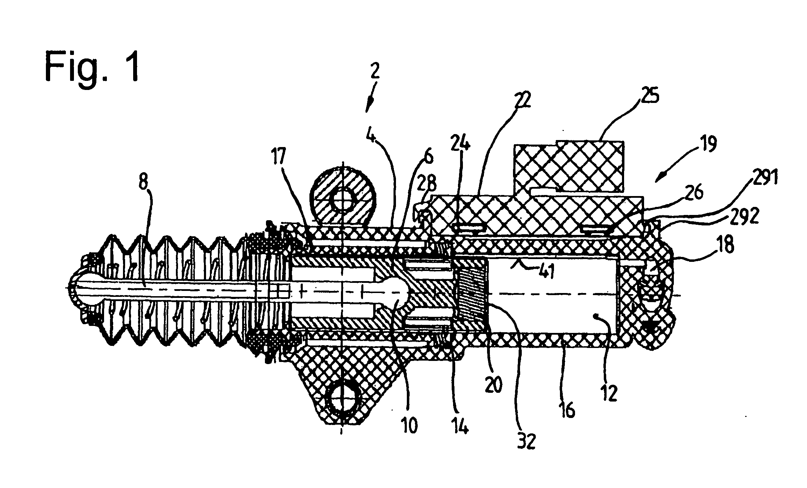

Figur 1 zeigt zunächst zum allgemeinen Verständnis der Erfindung einen montierten Nehmerzylinder 2 eines hydraulischen Kupplungsbetätigungssystems eines Kraftfahrzeuges, welcher im Wesentlichen aus einem zylinderförmigen Gehäuse 4 und einem darin axial beweglichen Kolben 6 besteht, der von einer mit dem Geberzylinder in Wirkverbindung stehenden Hydraulikflüssigkeit angesteuert wird und wobei die mit dem Kolben 6 verbundene Kolbenstange 8 einen Ausrückmechanismus einer Kupplung betätigen kann. Dazu ist die Kolbenstange 8 spielfrei, jedoch verschwenkbeweglich mittels eines Kugelgelenkes 10 im Kolben 6 gelagert. Die Stirnseite des Kolbens 6 und die Innenwandung des Zylindergehäuses 4 definieren einen variablen Druckraum 12, der gegenüber dem beweglichen Kolben 6 mit einer Ringlippendichtung 14 gegen die Umgebung abgedichtet ist. Das Zylindergehäuse 4 ist zweiteilig ausgeführt und weist ein vorderes Gehäuseteil 16 und ein hinteres Führungsrohr 17 auf. Das Gehäuseteil 16 umfasst einen Anschlusskanal 1 8, der über eine Fluidleitung mit einem Geberzylinder in Strömungsverbindung steht.

Der Nehmerzylinder 2 ist mit einem Sensorsystem 19 zur Erkennung der axialen Position des Kolbens 6 ausgestattet, welches einen Permanentmagneten 20 umfasst, der radial innerhalb des Kolbens 6 angeordnet und von diesem axial eingefasst ist. Damit wird der Permanentmagnet 20 bei Schockbelastungen des Kolbens 6 sicher an seiner Position gehalten. Zur genauen Anordnung des Permanentmagneten 20 am Kolben 6 wird auf die weiteren Figuren und deren Beschreibung verwiesen. Das Sensorsystem mit dem Permanentmagneten 20 kann selbstverständlich auch an einem Geberzylinder angeordnet sein, so dass die folgenden Ausführungen ohne Einschränkungen ebenso auf Geberzylinder zutreffen.

Das Sensorsystem 19 umfasst weiterhin ein an der Außenseite des Zylindergehäuses 4 montiertes Sensorgehäuse 22, in dem mindestens ein, beispielsweise zwei magnetfeldempfindliche Hall-Sensoren oder Reed-Kontakte 24 und 26 enthalten sind. Alternativ können auch kontinuierlich arbeitende kapazitive oder induktive Wegaufnehmer als Sensoren eingesetzt werden. Der axiale Abstand der Sensoren 24, 26 entspricht dabei einer Anfangs- und einer Endstellung des Kolbens 6. Bei einer Axialbewegung des Kolbens 6 entlang der Innenwandung des Zylindergehäuses 4 wird der jeweils axial auf der Höhe des Permanentmagneten 20 befindliche Sensor 24 bzw. 26 von dem Magnetfeld des Permanentmagneten 20 erfasst und führt daraufhin eine Schaltbewegung aus und/oder erzeugt ein entsprechendes elektrisches Signal, welches an eine nicht gezeigte Auswerteeinheit zur weiteren Bearbeitung weitergeleitet wird. Dazu ist an dem Sensorgehäuse 22 ein Anschlusskontaktteil 25 einer elektrischen Steckverbindung ausgeführt. Das Sensorgehäuse 22 ist mittels einer Rastverbindung 28 und einem Steg 291, der in eine am Gehäuse 16 angeformte Nut 292 formschlüssig eingreift, lösbar am Zylindergehäuse 4 angeordnet und kann bei Bedarf leicht ausgetauscht werden.

Im Folgenden wird speziell auf die erfindungsgemäße Anordnung des Permanentmagneten 20 am Kolben 6 eingegangen.

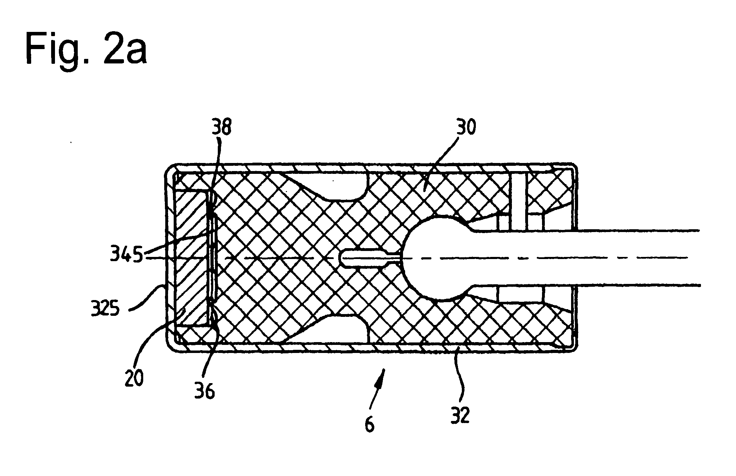

Figur 2a zeigt einen Kolben 6, der eine Kolbenschafthülse 32 aus einem nicht oder nur schwach magnetisierbaren Werkstoff, z.B. Edelstahl oder Aluminium, aufweist, in der ein Stützkörper 30 aus Kunststoff, der auch ein Gussteil sein kann, angeordnet ist. Der Stützkörper 30 weist an seiner dem Druckraum 12 zugewandten Stirnseite 345 eine Ausnehmung 36 auf, in welche der Permanentmagnet 20, der hier kreisringförmig, aber ebenso scheiben- oder stabförmig ausgebildet sein kann, eingesetzt ist. An der dem Kolbenboden abgewandten Stirnseite ist der Permanentmagnet 20 mittels mehrerer, vom Stützkörper 30 schräg abstehender Federzungen 38 elastisch gelagert und kann dadurch impulsartige Bewegungsänderungen des Kolbens 6 besser abfangen, ohne dabei der Gefahr einer Zerstörung ausgesetzt zu werden. Die den Kolben 6 im Beispiel ummantelnde Kolbenschafthülse 32 weist einen Boden 325 auf, der den Permanentmagneten 20 gegen den Druckraum 12 abdichtet und diesen entgegen einer leichten Vorspannung der Federzungen 38 in seiner Montageposition sichert.

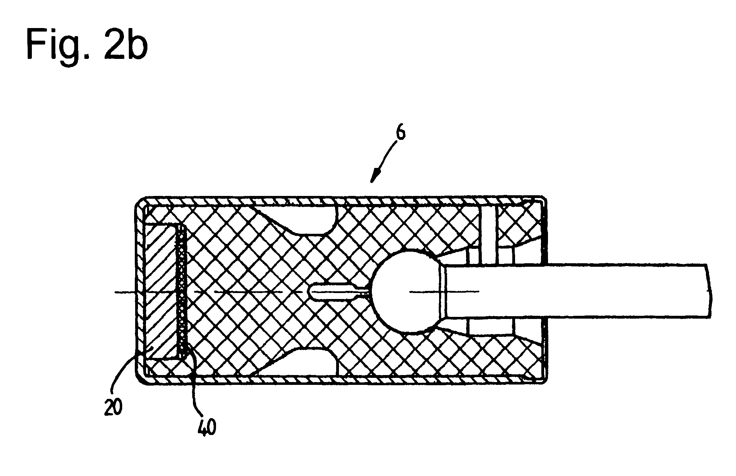

Die Figur 2b unterscheidet sich von der Darstellung der Figur 3a lediglich dadurch, dass der Permanentmagnet 20 an Stelle der Federzungen 38 auf einer komprimierbaren elastischen flächigen Unterlage 40 gelagert ist. Alternativ kann als Auflage auch ein elastischer Ring, beispielsweise ein O-Ring, benutzt werden.

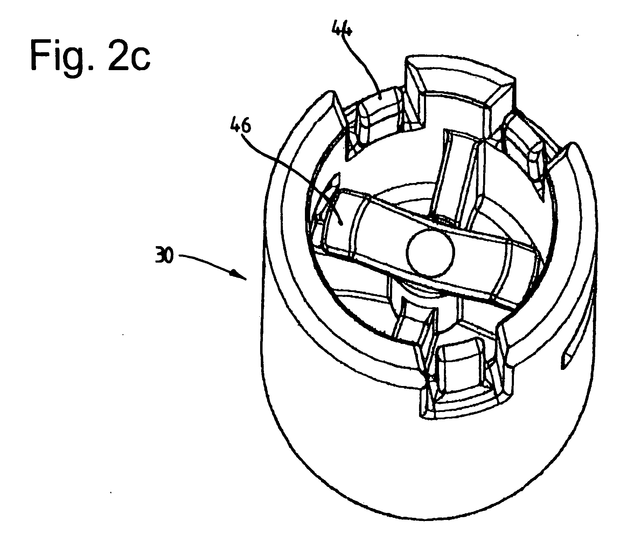

Die Figur 2c zeigt schließlich einen Stützkörper 30 eines Kolbens 6, bei dem im vorderen, dem Kolbenboden zugewandten Bereich, mehrere radiale Federzungen 44 und axiale Federzungen 46 zur elastischen Lagerung des Permanentmagneten 20 ausgebildet sind. Der Stützkörper 30 wird, wie bereits in den Fig. 3a, 3b ausgeführt, von einer Kolbenschafthülse 32 ummantelt, wobei der Permanentmagnet 20 zum Druckraum 12 sicher abgedichtet ist.

### Bezugszeichenliste

- 2: Nehmerzylinder
- 4: Zylindergehäuse
- 6: Kolben
- 8: Kolbenstange
- 10: Kugelgelenk
- 12: Druckraum
- 14: Ringlippendichtung
- 1 6: vorderes Gehäuseteil
- 17: Führungsrohr
- 18: Anschlussöffnung
- 19: Sensorsystem
- 20: Permanentmagnet
- 22: Sensorgehäuse
- 24, 26: Sensor
- 25: Anschlusskontaktteil
- 28: Rastvorrichtung
- 30: Stützkörper
- 32: Kolbenschafthülse
- 36, 65: Ausnehmung
- 38, 44, 46: Federzunge
- 40: elastische Unterlage
- 41: Innenwandung
- 291: Steg
- 292: Nut
- 325: Boden der Kolbenschafthülse
- 345: Stirnseite

## Patentansprüche

1. Kolben-Zylindereinheit (2) für ein hydraulisch betätigtes Kupplungs- oder Bremssystem an einem Kraftfahrzeug, mit
- einem in einem Gehäuse (4) angeordneten Kolben (6),
- der über eine Kolbenstange (8) an einer Innenwandung (41) des Gehäuses (4) axial verschiebbar ist und mit dieser zusammen einen variablen Druckraum (12) ausbildet und
- einem Sensorsystem (19) zur Sensierung der Stellung des Kolbens (6) in dem Zylinder (2), welches einen an dem Kolben (6) angeordneten Permanentmagneten (20) und mindestens einen am Gehäuse (4) angeordneten magnetfeldempfindlichen Sensor (24, 26) umfasst,
**dadurch gekennzeichnet,**
**dass** der Permanentmagnet (20) radial innerhalb des Kolbens (6) angeordnet und von diesem axial eingefasst ist sowie am Kolben (6) elastisch gelagert ist.

2. Kolben-Zylindereineinheit nach Anspruch 1,
**dadurch gekennzeichnet,**
**dass** der Kolben (6) einen Stützkörper (30) und eine diesen zumindest teilweise axial ummantelnde Kolbenschafthülse (32) mit einem Boden (325) umfasst, wobei der Permanentmagnet (20) zwischen dem Stützkörper (30) und dem Boden (325) angeordnet ist und an der dem Boden (325) abgewandten Stirnseite elastisch gelagert ist und von dem Boden (325) lagegesichert wird.

3. Kolben-Zylindereinheit nach Anspruch 1 oder 2,
**dadurch gekennzeichnet,**
**dass** der Permanentmagnet (20) in einer Ausnehmung (36) am Stützkörper (30) angeordnet ist.

4. Kolben-Zylindereinheit nach einem der Ansprüche 1 bis 3,
**dadurch gekennzeichnet,**
**dass** die Kolbenschafthülse (32) aus einem nicht oder nur schwach magnetisierbaren Material besteht.

5. Kolben-Zylindereinheit nach einem der Ansprüche 1 bis 4,
**dadurch gekennzeichnet,**
**dass** die elastische Lagerung des Permanentmagneten (20) mittels von dem Stützkörper (30) abstehender Federzungen (38) oder einer komprimierbaren elastischen Unterlage (40) oder eines elastischen Rings erfolgt.

## Claims

1. Piston-cylinder unit (2) for a hydraulically activated coupling or braking system on a motor vehicle, with
- a piston (6) arranged in a housing (4),
- which is axially displaceable via a piston rod (8) on an inner wall (41) of the housing (4) and forms, together with said piston rod, a variable pressure chamber (12) and
- a sensor system (19) for sensing the position of the piston (6) in the cylinder (2), which comprises a permanent magnet (20) arranged on the piston (6) and at least one magnetic field-sensitive sensor (24, 26) arranged on the housing (4),
**characterized in that** the permanent magnet (20) is radially arranged inside the piston (6) and is axially enclosed thereby and resiliently mounted on the piston (6).

2. Piston-cylinder unit according to Claim 1, **characterized in that** the piston (6) comprises a support body (30) and a piston shaft sleeve (32) with a base (325) at least partially axially encasing said support body, the permanent magnet (20) being arranged between the support body (30) and the base (325) and being resiliently mounted on the front face facing away from the base (325) and being positionally secured by the base (325).

3. Piston-cylinder unit according to Claim 1 or 2, **characterized in that** the permanent magnet (20) is arranged in a recess (36) on the support body (30).

4. Piston-cylinder unit according to one of Claims 1 to 3, **characterized in that** the piston shaft sleeve (32) consists of a material which may not be magnetized or may be only slightly magnetized.

5. Piston-cylinder unit according to one of Claims 1 to 4, **characterized in that** the resilient mounting of the permanent magnet (20) is carried out by means of spring tongues (38) projecting from the support body (30) or a compressible resilient support surface (40) or a resilient ring.

## Revendications

1. Unité (2) à piston et cylindre pour un système d'embrayage ou de freinage actionné hydrauliquement sur un véhicule automobile, qui présente :
un piston (6) disposé dans un boîtier (4), lequel piston peut coulisser axialement par l'intermédiaire d'une tige de piston (8) sur une paroi intérieure (41) du boîtier (4) et forme avec ce dernier un espace sous pression (12) variable et
un système de détecteurs (19) qui détecte la position du piston (6) dans le cylindre (2) et qui comprend des aimants permanents (20) disposés sur le piston (6) et au moins un détecteur (24, 26) sensible au champ magnétique et disposé sur le boîtier (4),
**caractérisée en ce que**
l'aimant permanent (20) est disposé radialement à l'intérieur du piston (6), est immobilisé axialement dans ce dernier et est monté élastiquement sur le piston (6).

2. Unité à piston et cylindre selon la revendication 1, **caractérisée en ce que** le piston (6) présente un corps de soutien (30) et une douille (32) de tige de piston qui enveloppe axialement au moins une partie de ce corps de soutien et est dotée d'un fond (325), l'aimant permanent (20) étant disposé entre le corps de soutien (30) et le fond (325), étant monté élastiquement sur le côté frontal non tourné vers le fond (325) et étant fixé en position par le fond (325).

3. Unité à piston et cylindre selon les revendications 1 ou 2, **caractérisée en ce que** l'aimant permanent (20) est disposé dans une découpe (36) ménagée dans le corps de soutien (30).

4. Unité à piston et cylindre selon l'une des revendications 1 à 3, **caractérisée en ce que** la douille (32) de la tige de piston est constituée d'un matériau non magnétisable ou faiblement magnétisable.

5. Unité à piston et cylindre selon l'une des revendications 1 à 4, **caractérisée en ce que** le montage élastique de l'aimant permanent (20) est réalisé au moyen de languettes élastiques (38) qui débordent du corps de soutien (30), au moyen d'une couche inférieure (40) élastique et comprimable ou au moyen d'une bague élastique.
